# EUROPEAN PATENT SPECIFICATION

(11) **EP 0 758 851 B1**
(45) Date of publication and mention of the grant of the patent: **22.07.1998**
(21) Application number: 95916647.1
(22) Date of filing: 13.04.1995
(51) Int. Cl.: A23L 1/238, A23L 1/23

(54) **A PROCESS FOR THE PRODUCTION OF A SEASONING SAUCE**
VERFAHREN ZUR HERSTELLUNG EINES GEWÜRZES
PROCEDE DE PRODUCTION D'UNE SAUCE D'ASSAISONNEMENT

(30) Priority: 21.04.1994 DE 4413951
(43) Date of publication of application: 26.02.1997
(73) Proprietor: CPC Maizena Gesellschaft mit beschränkter Haftung, D-74074 Heilbronn (DE)
(72) Inventor: MÜLLER, Rudi, 74889 Sinsheim (DE); FEICK, Karl-Heinz, 74225 Roigheim (DE); FRANK, Barbara, 74223 Flein (DE); RIEDEL, Ulrich, 74912 Kirchardt (DE); BLORTZ, Doris, 74360 Ilsfeld (DE)
(74) Representative: Keller, Günter, Dr.
(86) International application number: EP9501386
(87) International publication number: WO9528853

(56) References cited:
- EP-A- 0 595 194
- US-A- 3 495 991
- US-A- 3 852 479
- PATENT ABSTRACTS OF JAPAN vol. 8 no. 187 (C-240) & JP,A,59 082046 (AJINOMOTO) 11 May 1984,
- PATENT ABSTRACTS OF JAPAN vol. 6 no. 110 (C-109) & JP,A,57 039756 (NISSHIN FLOUR MILLING CO) 5 March 1982,
- DATABASE WPI Week 9301 Derwent Publications Ltd., London, GB; AN 93-006744 & KR,A,9 201 203 (SUNCHEON FOOD CO) , 6 February 1992
- DATABASE WPI Week 7352 Derwent Publications Ltd., London, GB; AN 73-81331U & JP,A,73 043 636 (HAGASHIMARU SHOYU SUPERIOR) , 1973

## Description

The invention relates to a process for the production of a seasoning sauce similar to the known soy sauces.

It is well known to produce soy sauces by a fermentation process, in which soybeans, in the form of whole beans or crushed defatted soybeans, and optionally wheat, usually in the form of a roasted coarse meal, and salt are used in varying proportions. Depending on the kind of malt, an enzyme-containing, fungus-covered substrate, referred to as koji, is initially produced. The koji is then mashed with salt water and subjected to a multi-step fermentation in which a combined hydrolytic process with lactic acid and alcoholic fermentation proceeds, and to a maturing phase. The fermentation organisms used for the koji production are the hypha fungi of the strain Aspergillus oryzae or A. soyae. The salt-tolerant lactococci Pediococcus halophilos, and the yeast Zygosaccharomyces rouxii are employed in the fermentation phase. Contrary to previously known methods, where the natural accompanying flora effected the fermentation, modern processes use defined starter cultures. In the case of naturally fermented sauces, no mineral acid is employed for accelerating the decomposition of the raw plant materials. This is done exclusively by means of enzymatic hydrolysis effected by the enzymes formed during the koji phase. In recent developments, immobilized enzymes or immobilized microorganisms are used for fermentation. However, owing to the then shortened fermentation period and reduced salt content during mashing, the taste qualities of the sauces thus achieved are not as good as those produced by the former process. After a prolonged maturing phase (3 to 6 months) the mash is refined by squeezing, heating, turbidity sedimenting and layer filtration so as to yield the stable ready-to-eat sauce. The traditionally prepared sauce has a dark color and a salty and full, roasty and malty flavor which is somewhat unfamiliar to Western taste. Furthermore, it only has a minor content of free glutamate which has a taste-enhancing effect owing to the usually used raw materials.

It is also known to hydrolyze proteins of vegetable or animal origin by means of protease preparations obtained from plants, bacteria or fungi. These hydrolyses represent short-term processes without a maturation period. Therefore, hydrolyzates processed and heated in such a way have little taste even with an increased broken-up nitrogen proportion and a good degree of hydrolysis. They usually have a raw and hardly harmonious taste. Processes are described serving for eliminating these drawbacks by adding microbial enzyme sources (US 4,587,127, US 4,684,527, DE 2,314,984) or glutaminase (DE 4,116,744, US 3,852,479). However, no decisively improved results are obtained by this in the final analysis.

The object of the present invention was to produce a seasoning sauce similar to soy sauces, but which, as compared to the known soy sauces, has a lighter color, a high glutamate content, is less roasty and more neutral but harmonious as regards taste so as to be better adapted to the Western trend of taste and which has the lowest possible salt content. Another object was to have more broken-up nitrogen in the product than usually possible but shorten the production process and make do with a process period of few weeks, without a raw-fruit character being determinable in the seasoning sauce in spite of the short maturation period.

This should also be achieved without further enzyme additions (with the exception of protease) and starter cultures (with the exception of koji starter).

JP-A-52-76488 describes a process for the production of a seasoning sauce, based on protein-containing raw materials such as soybeans, soybean protein, wheat, barley, wheat gluten, corn gluten, fish protein, milk protein, etc., and carbohydrate-containing raw materials such as sorghum, rice bran, wheat bran, potato, molasses, starch residues, etc., from which a koji is made using suitable koji organisms, such as particularly Aspergillus soyae and Aspergillus oryzae. The koji is fermented in a saline solution at temperatures between 30 and 55°C.

US-P-4,115,591 describes a process for the production of a koji, in which a koji fungus is cultivated in a modified koji substrate at a temperature of 20 to 40°C for 30 to 100 hours in the presence of 0.05 to 8 % of a salt of an aliphatic carboxylic acid having up to 4 carbon atoms. The koji substrate is selected from the group consisting of soybeans, defatted soybeans, gluten, rice, wheat, wheat bran, barley, oats, corn, fish meal and other products. The resulting koji is used for the production of fermented food products such as soy sauce, miso and sake, e.g. by fermentation in a 22 % salt solution at 30°C for 150 days.

EP-A-417,481 describes a process for the production of a soy sauce by fermentation on the basis of a koji, produced by fermenting a mixture of crushed soybeans and wheat by means of a koji culture. The koji is then hydrolyzed in aqueous suspension with the enzymes obtained during the fermentation with the koji culture, at 45 to 60°C for 3 to 8 hours, whereupon, after the addition of sodium chloride to obtain a salt content of 15 to 19 %, the mixture is subjected to a four to eight week fermentation.

US Patent Specifications 3,912,822 and 3,852,479 describe a process for the production of a protein hydrolyzate having a high glutamic acid content which is obtained by adding a glutaminase or microbial glutaminase source together with a proteolytic enzyme to a protein-containing starting material, such as soybeans or wheat gluten. The salt content in the mash is 10 to 15 % by weight.

JP-A-59082046 discloses a process for preparing a seasoning sauce by mixing a koji prepared from grain, e.g. a wheat-gluten bread with milk and salt and fermenting the mixture.

US-P-5,141,757 and EP 429,760, respectively, describe a process for the production of a seasoning agent in which an aqueous suspension of a protein-rich material, e.g. crushed defatted soybeans, is hydrolyzed by means of protease, which is then subjected to a heat treatment and subsequently allowed to mature by means of a koji addition. For this purpose, the salt content is adjusted to 10 to 17 % and inoculated using yeasts. The process takes up to 8 weeks before the mash is processed as usual by filtrating and heating.

Agric. Biol. Chem. 49, 745-750 (1985) describes the growth and respiration coefficient of the fungus Aspergillus oryzae, the fungus being cultivated on a solids substrate. Bread is used as the solids substrate. The resulting koji is not fermented any further.

DE-A1-4 235,928 describes a process for the production of a seasoning sauce, an enzyme-containing, fungus-covered substrate being initially mashed with water containing common salt, the mash being subjected to fermentation for a prolonged period of time and then processed by squeezing, pasteurizing and filtrating. The substrate used is divided bread having a high wheat gluten proportion and mashing is carried out with salt water, so that the salt content in the mash is 4 to 12 % by weight, preferably 7 to 8 % by weight, and the fermentation is carried out in several steps at temperatures decreasing from 40 to 45°C in the first step to room temperature in the last step, for 8 to 12 weeks.

It has now been surprisingly found that the problems according to the invention can be solved by a modification of the latter process, the mashing of the bread-koji being not carried out with salt water but with an enzymatic, salt-containing wheat gluten hydrolyzate, e.g. one used in the process of above-mentioned EP 429,760.

Special unexpected advantages are obtained by means of a special process control and by using raw materials conventionally not employed for the production of soy sauces, namely by using an enzyme-containing, fungus-covered substrate (koji) of baked or extruded divided bread having a high wheat gluten proportion, which according to the invention is mashed with an enzymatic hydrolyzed of wheat gluten (eHVP) instead of a salt solution. The hydrolysis conditions are chosen such that swift liquefaction takes place. The hydrolyzate suspension is microbially contaminated to such a minor degree that it is possible to proceed without further intermediate heating and that the hydrolyzate has no bitter taste and a very small content of free amino acids and of pyroglutamic acid.

Thus, the object of the invention relates to a process for the production of a seasoning sauce using one or more microorganisms usual for the production of soy sauces, (A) a fungus-covered, enzyme-containing koji substrate of divided bread having a high wheat gluten content being initially mashed with (B) an aqueous medium containing common salt, (C) the mash being subjected in several steps to a fermentation for a prolonged period of time and finally (D) processed by squeezing, pasteurizing and filtrating, wherein
(A) divided bread made by a conventional baking process from dough or by cook-extrusion of the protein-rich raw material mixture, is used for the production of the koji substrate,
(B) the mashing liquid used is an enzymatic, salt-containing wheat gluten hydrolyzate having a high wheat gluten proportion in the form of a suspension, which is not heated intermediately and not filtered,
(B1) the ratio of koji substrate (A) to wheat gluten hydrolyzate (B) being 50 to 200 % by weight (based on the dry matter of the wheat gluten hydrolyzate suspension) and the salt content of the mash being 3 to 10 % by weight, preferably 5 to 8 % by weight,
(C) the fermentation is carried out in several steps, starting at 30 to 35°C, via 40 to 45°C in a later step to room temperature in the last step, without further enzyme addition for a total of 1 to 8 weeks, and finally
(D) the fermentation product is processed in known manner.

Mashing using koji is carried out at such a ratio that the fermentation can be terminated within 4 weeks. Processing takes place by squeezing, pasteurizing and subsequently filtrating the mash, from which a seasoning powder can be made as usual after concentration and drying.

The enzyme-containing, fungus-covered substrate, referred to as koji in technical language, is produced in any conventional manner but by using baked and divided bread having a high wheat gluten proportion. As an alternative, the bread can also be made by extrusion. It is useful to employ a starter culture, preferably Aspergillus oryzae. A dense mycelium forms on the substrate which is mashed with a wheat gluten hydrolyzate obtained by enzymatic proteolysis in salt-containing water.

It is preferred to use a neutral protease having an endopeptidase effect for the production of the wheat gluten hydrolyzate (eHVP). The substrate consists predominantly of wheat gluten, of which in aqueous suspension 5 to 30 % by weight, preferably 10 to 20 % by weight, are added by stirring and which decomposes the substrate at 40 to 65°C, preferably at 45 to 55°C, for 1 to 6 hours. The activity of the enzyme employed results in a marked liquefaction but no release of amino acids worth mentioning. From a microbiological point of view, it is favorable to carry out the hydrolysis at a salt content of 4 to 8 % by weight of NaCl.

The eHVP is then mashed with the koji substrate in fresh form, i.e. without intermediate heating, at 30 to 35°C so as not to damage the thermally unstable enzyme activities thereof. The koji enzymes release a considerable amount of amino nitrogen and amino acids within few days and complete the decomposition of gluten. In order to accelerate fermentation, the temperature is then raised to 40 to 45°C for 1 to 2 weeks prior to the short-term maturing at room temperature. For this purpose, it is possible to add a salt-tolerant yeast, such as Zygosaccharomyces rouxii, to the mash. However, this is not absolutely necessary.

The starting material used is preferably bread made of 20 to 80 % of weight, preferably 30 to 60 % by weight, of wheat gluten (protein content of 80 %) and 80 to 20 % by weight of wheat flour and/or other additives (20 to 50 % by weight) such as oat flakes, leguminous flours, pearl barley, lactoprotein and whey protein, yeast extract, potato flakes, tomato powder using leavening agents. The bread is subjected to the koji, production and fermentation in the form of slices, cubes, flakes or pellets. It is produced according to known processes by baking the premixed raw material mixture or by extruding the moist raw material mixture. In order to preserve and store the baked bread, it can be frozen as one piece or air dried after dividing it into pieces as usual. The extruded product can be stored directly. After thawing or rehydrating (to common fresh bread moisture), both the baked bread and the extruded bread are to be used like fresh bread. The bread texture (moisture, porosity) represents a good substrate for solids fermentation, and the starter fungus, Aspergillus oryzae, produces a dense mycelium on this gluten-rich substrate. The proteolytic enzymes having exopeptidase activity including the glutaminases are especially formed on this substrate during the koji phase.

While according to the process described in US Patent No. 3,912,822 a high glutamate content can only be achieved when glutaminase enzyme is added, an even higher glutamate content is obtained according to the invention without enzyme addition.

The well-calculated use of bread for koji fermentation produces surprisingly high hydrolytic activities, particularly a high glutaminase activity. This expresses itself by a high glutamate/nitrogen ratio. Thus, a value of 1.2 to 1.4 is achieved within 10 days, with a nitrogen value (over 2.5 %) markedly higher than that of ordinary soy sauces.

Patent EP 0,429,760 describes an intermediate heating of eHVP as being necessary. In the process according to the invention this is rather detrimental, since, in this case, undesired amounts of pyroglutamic acid can be formed from the intermediately released glutamine. This acid does not have a taste-enhancing effect.

The minor release of pyroglutamic acid (PG) by the process control as described is shown by a PG/glutamate ratio of less than 0.1 in the first 10 days of fermentation.

The mash is processed as usual by press filtration, heating and subsequent clarification by membrane filtration (ultrafiltration or microfiltration on inorganic membranes). The clear seasoning liquid can be preconcentrated for the purpose of drying, then mixed with salt and other carrier substances, and subsequently vacuum-dried or spray-dried.

### Example 1

1.5 kg of vital wheat gluten (protein content of 80 %) are added by stirring into 10 l of water containing 6 % by weight of NaCl. The initial solution was previously admixed with 1 % (based on dry solids of the substrate) of endoprotease Pescalase from the Ibis company. As an alternative, it is also possible to use e.g. 0.2 % of Prozyme 6 (protease of fungal origin from the Amano company).

The container contents are maintained at 50°C under constant stirring and incubated for a total of 3 hours, a marked liquefaction of the gluten suspension being obtained. About 2 kg of koji substrate is added in fresh condition, i.e. without filtration and intermediate heating at 30 to 35°C, to the hydrolyzate (eHVP). The koji is made from bread having a high wheat gluten proportion. For this purpose, 750 g of vital wheat gluten (protein content of 80 %) are mixed with 375 g of wheat flour (Type 550) as well as 375 g of peameal and 75 g of leavening agent and kneaded into a firm dough by adding 1000 g of water. The dough is shaped into bread and baked at 220°C until it has adopted a light color. The bread is cut into cubes which are inoculated with 1 % of a spore suspension of Aspergillus oryzae (DSM 1863, culture obtained from the German collection of microorganisms).

The cubes are fermented on trays in a cabinet having moderate temperature adjustment at 30°C and high humidity for about 50 hours (an intense aeration of the substrate having to be ensured) until a dense mycelium layer has grown around the cubes (= koji).

Mashing of the entire koji into the eHVP takes place without further salt addition. After 1 to 2 days, the koji is mixed intensively with the eHVP and initially incubated at 30°C for another 2 to 4 days before the fermentation temperature, accompanied by occasional thorough mixing, is raised to 40 to 45°C for 1 to 2 weeks.

For the purpose of maturing at room temperature, the salt content in the mash is raised to 7 % by weight by adding NaCl. After 1 to 2 weeks of maturing, the batch is processed by press filtration, pasteurization and membrane filtration. The resulting seasoning liquid has a full and harmonious taste.

## Claims

1. A process for the production of a seasoning sauce, using one or more microorganisms usual for the production of soy sauces, (A) a fungus-covered, enzyme-containing koji substrate of divided bread having a high wheat gluten content being initially mashed with (B) an aqueous medium containing common salt, (C) the mash being subjected in several steps to fermentation for a prolonged period of time and finally (D) processed by squeezing, pasteurizing and filtrating, wherein
(A) divided bread made by a conventional baking process from dough or by cook-extrusion of the protein-rich raw material mixture, is used for the production of the koji substrate,
(B) the mashing liquid used is an enzymatic, salt-containing wheat gluten hydrolysate having a high wheat gluten proportion in the form of a suspension, which is not heated intermediately and not filtered,
(B1) the ratio of koji substrate (A) to wheat gluten hydrolyzate (B) being 50 to 200 % by weight (based on the dry matter of the wheat gluten hydrolysate suspension) and the salt content of the mash being 3 to 10 % by weight, preferably 5 to 8 % by weight,
(C) the fermentation is carried out in several steps, starting at 30 to 35°C, via 40 to 45°C in a later step to room temperature in the last step, without further enzyme addition for a total of 1 to 8 weeks, and finally
(D) the fermentation product is processed in known manner.

2. The process according to claim 1 wherein the substrate A used is bread made of 20 to 80 % by weight, preferably 30 to 60 % by weight, of wheat gluten and 80 to 20 % by weight of wheat flour and/or other additives such as oat flakes, potato flakes, leguminous flours, pearl barley, lactoprotein and whey protein and/or yeast extract or tomato powder using water and leavening agents, which bread is subjected in the form of slices, cubes, flakes or pellets to koji production and fermentation.

3. The process according to claim 1 or 2 wherein the wheat gluten hydrolysate (B) used is a substrate obtained from a 5 to 30 % by weight of aqueous wheat gluten suspension which has been hydrolyzed by means of a neutral protease having endopeptidase effect at 40 to 65°C for 1 to 6 hours.

4. The process according to claim 3 wherein the hydrolysis has been carried out with a salt content of 4 to 8 % by weight.

5. The process according to any one of claims 1 to 4, wherein mashing of the koji substrate (A) with the wheat gluten hydrolysate (B) takes place at a temperature of 30 to 35°C.

## Patentansprüche

1. Verfahren zur Herstellung einer Würzsoße unter Verwendung eines oder mehrerer für die Herstellung von Sojasoßen üblicher Mikroorganismen, wobei zunächst (A) ein pilzbewachsenes, enzymhaltiges Koji-Substrat aus zerteiltem Brot mit hohem Weizenkleberanteil mit (B) einem kochsalzhaltigen wäßrigen Medium eingemaischt wird, (C) die Maische in mehreren Stufen längere Zeit einer Fermentation unterworfen und schließlich (D) durch Abpressen, Pasteurisieren und Filtration aufgearbeitet wird, wobei
(A) für die Herstellung des Koji-Substrats ein zerteiltes, durch einen traditionellen Backprozeß aus Teig oder durch eine Heißextrusion der proteinreichen Rohstoffmischung hergestelltes Brot eingesetzt wird,
(B) als Einmaischflüssigkeit ein enzymatisches, salzhaltiges Weizenkleberhydrolysat mit hohem Weizenkleberanteil in Form einer nicht zwischenerhitzten und nicht filtrierten Suspension verwendet wird,
(B1) das Verhältnis von Koji-Substrat (A) zu weizenkleberhydrolysat (B) 50-200 Gew.% (bezogen auf Trockensubstanz der Weizenkleberhydrolysat-Suspension) und der Salzgehalt der Maische 3-10 Gew.%, vorzugsweise 5-8 Gew.% betragen,
(C) die Fermentation in mehreren Stufen bei anfänglich 30-35°C, über 40-45°C in einer späteren Stufe, bis Raumtemperatur in der letzten Stufe während insgesamt 1-8 Wochen ohne weitere Enzymzugabe durchgeführt wird und schließlich
(D) das Fermentationsprodukt in an sich bekannter Weise aufarbeitet wird.

2. Verfahren nach Anspruch 1, wobei als Substrat A ein aus 20-80 Gew.%, vorzugsweise 30-60 Gew.% Weizenkleber und 80-20 Gew.% Weizenmehl und/oder anderen Zusatzstoffen wie Haferflocken, Kartoffelflocken, Leguminosemehl, Gerstengraupen, Milch- und Molkeneiweiß und/oder Hefeextrakt oder Tomatenpulver unter Verwendung von Wasser und Backtriebmitteln hergestelltes Brot eingesetzt wird, welches in Form von Scheiben, Würfeln, Flocken oder pellets der Koji-Herstellung und Fermentation unterworfen wird.

3. Verfahren nach Anspruch 1 oder 2, wobei man als Weizenkleberhydrolysat (B) ein Substrat einsetzt, erhalten aus einer 5-30 Gew.%igen wäßrigen Weizenklebersuspension, die während 1-6 Stunden bei 40-65°C mittels einer neutralen Protease mit Endopeptidasewirkung hydrolysiert worden ist.

4. Verfahren nach Anspruch 3, wobei die Hydrolyse bei einem Salzgehalt von 4-8 Gew.% durchgeführt worden ist.

5. Verfahren nach einem der Ansprüche 1-4, wobei das Einmaischen des Koji-Substrats (A) mit dem Weizenkleberhydrolysat (B) bei einer Temperatur von 30-35°C erfolgt.

## Revendications

1. Procédé pour la production d'une sauce d'assaisonnement, en utilisant un ou plusieurs micro-organismes usuels pour la production de sauces au soja, (A) un substrat de koji couvert de champignon, contenant une enzyme, consistant en pain divisé ayant une haute teneur en gluten de blé étant initialement brassé avec (B) un milieu aqueux contenant du sel de cuisine, (C) la pâte étant soumise en plusieurs étapes à une fermentation pendant un temps prolongé et finalement (D) étant traitée par expression, pasteurisation et filtration, dans lequel
(A) du pain divisé, préparé par un procédé classique de cuisson au four à partir d'une pâte ou par extrusion-cuisson du mélange de matières premières riche en protéines, est utilisé pour la production du substrat de koji,
(B) le liquide de brassage utilisé est un hydrolysat enzymatique de gluten de blé, contenant du sel, renfermant une forte proportion de gluten de blé, sous forme d'une suspension, qui n'est pas soumise à un chauffage intermédiaire et à une filtration,
(B1) le rapport du substrat de koji (A) à l'hydrolysat de gluten de blé (B) étant compris dans l'intervalle de 50 à 200 % en poids (sur la base de la matière sèche de la suspension d'hydrolysat de gluten de blé) et la teneur en sel de la pâte étant comprise dans l'intervalle de 3 à 10 % en poids, de préférence de 5 à 8 % en poids,
(C) la fermentation est effectuée en plusieurs étapes, en partant d'une température de 30 à 35°C, en passant par une température de 40 à 45°C dans une étape ultérieure et en allant jusqu'à la température ambiante dans la dernière étape, sans autre addition d'enzyme, pendant un temps total de 1 à 8 semaines, et, finalement,
(D) le produit de fermentation est traité d'une manière connue.

2. Procédé suivant la revendication 1, dans lequel le substrat A utilisé consiste en pain préparé à partir d'une quantité de 20 à 80 % en poids, de préférence de 30 à 60 % en poids de gluten de blé et d'une quantité de 80 à 20 % en poids de farine de blé et/ou d'autres additifs tels que des flocons d'avoine, des flocons de pommes de terre, des farines de légumineuses, de l'orge perlée, une lactoprotéine et la protéine de sérum de lait et/ou un extrait de levure ou de la poudre de tomates en utilisant de l'eau et des agents levants, pain qui est soumis sous forme de tranches, de cubes, de paillettes ou de granules à la production de koji et à la fermentation.

3. Procédé suivant la revendication 1 ou 2, dans lequel l'hydrolysat de gluten de blé (B) utilisé est un substrat obtenu à partir de 5 à 30 % en poids d'une suspension aqueuse de gluten de blé qui a été hydrolysée au moyen d'une protéase neutre ayant un effet d'endopeptidase à une température de 40 à 65°C pendant un temps de 1 à 6 heures.

4. Procédé suivant la revendication 3, dans lequel l'hydrolyse a été effectuée à une teneur en sel de 4 à 8 % en poids.

5. Procédé suivant l'une quelconque des revendications 1 à 4, dans lequel le brassage du substrat de koji (A) avec l'hydrolysat de gluten de blé (B) s'effectue à une température de 30 à 35°C.
